Europäisches Patentamt

European Patent Office

Office européen des brevets

(11) Veröffentlichungsnummer: **0 256 317 B1**

(12) **EUROPÄISCHE PATENTSCHRIFT**

(45) Veröffentlichungstag der Patentschrift: **24.07.91**

(21) Anmeldenummer: **87110289.3**

(22) Anmeldetag: **16.07.87**

(51) Int. Cl.⁵: **B23Q 11/00, G01B 5/00**

(54) **Werkzeugmaschine mit einer Vorrichtung zur Kompensation der Wärmedehnung zweier relativ bewegbarer Maschinenteile.**

(30) Priorität: **13.08.86 DE 3627546**

(43) Veröffentlichungstag der Anmeldung:
**24.02.88 Patentblatt 88/08**

(45) Bekanntmachung des Hinweises auf die
Patenterteilung:
**24.07.91 Patentblatt 91/30**

(84) Benannte Vertragsstaaten:
**CH DE FR GB IT LI**

(56) Entgegenhaltungen:
**CH-A- 222 848**
**DE-A- 2 450 322**
**DE-A- 3 309 722**
**FR-E- 47 092**

(73) Patentinhaber: **MAHO Aktiengesellschaft**
**Postfach 1280 Tiroler Strasse 85**
**W-8962 Pfronten(DE)**

(72) Erfinder: **Grund, Peter, Dr. Ing.**
**Sootstrasse 96**
**W-5138 Heinsberg 7(DE)**

(74) Vertreter: **Patentanwälte Beetz sen. - Beetz**
**jun. Timpe - Siegfried - Schmitt-Fumian**
**Steinsdorfstrasse 10**
**W-8000 München 22(DE)**

## Beschreibung

Die Erfindung betrifft eine Werkzeugmaschine mit einem Spindelstock und einer Vorrichtung zum Erfassen der Wärmedehnung des Spindelstocks der im Oberbegriff des Patentanspruchs 1 angegebenen Gattung.

Um die an moderne Maschinensysteme, insbesondere an programmgesteuerte Fräsmaschinen, gestellten hohen Genauigkeitsanforderungen erfüllen zu können, ist es notwendig, daß die verwendeten Meßsysteme möglichst fehlerfrei und unabhängig von den sich ändernden Betriebsbedingungen arbeiten. Um eine Beeinträchtigung der Meßsysteme z. B. durch Verschmutzung nach Möglichkeit zu vermeiden, werden diese möglichst außerhalb des Arbeitsbereichs der Maschine, d. h. am mittleren bzw. hinteren Teil des Spindelstocks, angeordnet. Hierdurch kommt es jedoch aufgrund von Wärmedehnungen insbesondere des Spindelstocks während des Anfahrens bis zum Erreichen einer gleichbleibenden Betriebstemperatur zu Verlagerungen zwischen der Arbeitsspindel bzw. dem Bearbeitungswerkzeug und dem Meßsystem.

Aus der DE-A- 24 50 322 ist eine Werkzeugmaschine mit einer Vorrichtung zum Erfassen der Wärmedehnung des längsverschiebbaren Spindelstocks gemäß dem Oberbegriff des Patentanspruchs 1 bekannt, bei welcher an einer Seitenwand des Spindelstock ein sog. Dehnstab dicht aufliegend befestigt ist, der den eigentlichen Maßstab trägt. Der Werkstoff dieses Dehnstabes ist so gewählt, daß in den jeweils auftretenden Temperaturbereichen seine Wärmedehnung um einen bestimmten Betrag größer als die des Spindelstocks ist. Der Dehnstab ist mit seinem hinteren Ende am hinteren - sich nur geringfügig erwärmenden - Ende des Spindelstocks starr befestigt. Bei einer Erwärmung des Spindelstocks z. B. während der Anfahrphase wird durch die vergrößerte Längung des Dehnstabes die vom Meßsystem nicht direkt erfaßte Längung der in der Stirnseite des Spindelstocks angebauten Maschinenteile, z. B. eines Vertikal-Fräskopfes, kompensiert. Der Maßstab ist mit seinem vorderen Ende am vorderen Ende des Dehnstabes unter Verwendung einer wärmeisolierenden Zwischenschicht befestigt, die Wärmedehnungen des Maßstabs vermeiden soll. Da der Dehnstab in Längsrichtung relativverschiebbar am Spindelstock anliegt, kann kein durchgehender formschlüssiger Kontakt über die gesamte Dehnstablänge erreicht werden, was zu einem nicht genau definierten Wärmeübergang zwischen dem Spindelstock und dem Dehnstab führt. Insbesondere durch Verformungen des aus einem mechanisch relativ biegsamen Werkstoff, nämlich Aluminium, bestehenden Dehnstabes bei der Montage oder im Betrieb kann die durchgehende flächige Auflage am Spindelstock beeinträchtigt werden, was merkbare Änderungen des Wärmeübergangs und damit der Wärmedehnung dieses Stabes zur Folge hat. Darüber hinaus muß die Längenbemessung der jeweiligen Dehnstäbe auch den unterschiedlichen Maschinenteilen bzw. Maschinentypen genau angepaßt sein.

Aus der DE-B- 1 010 802 ist es bekannt, zur Kompensation der Wärmedehnungen eines Spindelgehäuses einen Dehnstab parallel zum Spindelstock anzuordnen und einerseits mit dem Maschinenständer sowie andererseits mit einem das Spindelgehäuse tragenden Maschinenteil fest zu verbinden, so daß bei einer Temperaturänderung das gesamte Spindelgehäuse verschoben wird. Dieses Erfassungs- und Kompensationssystem ist außerordentlich aufwendig, da der Dehnstab in die Maschine selbst integriert ist. Ein Nachrüsten von Werkzeugmaschinen mit diesem System ist nicht möglich.

Aus der DE-A- 33 09 722 ist ferner eine Verzahnungsmaschine mit einer Vorrichtung zur Erfassung von Wärmedehnungen des Maschinenbetts bekannt, bei der ein Trägerstab mit seinem hinteren Ende in der verlängerten Drehachse eines Rundtisches am Maschinenbett starr befestigt ist und an seinem vorderen Ende einen Lesekopf trägt. An einem das Spindelgehäuse tragenden Ständer ist ein Maßstab mit einer Meßskala dem Lesekopf gegenüberliegend angeordnet. Der Trägerstab ist von einem Schutzrohr umgeben und besteht aus einem Werkstoff, dessen Wärmedehnung in dem im Maschinenbetrieb auftretenden Temperaturbereich praktisch vernachlässigbar ist. Der Nachteil dieser Vorrichtung besteht insbesondere darin, daß nur die relativ geringeren Wärmedehnungen des Maschinenbetts erfaßt werden können, während die wesentlich größeren Wärmedehnungen des Spindelgehäuses unberücksichtigt bleiben.

Aufgabe der Erfindung ist es, eine Werkzeugmaschine mit einer Vorrichtung zum Erfassen der Wärmedehnung ihres Spindelstocks gegenüber dem Maschinenständer zu schaffen, die bei konstruktiv vereinfachtem Aufwand mit verbessertem Ansprechverhalten und höherer Meßgenauigkeit arbeitet.

Diese Aufgabe wird erfindungsgemäß durch die im Patentanspruch 1 angegebenen Merkmale gelöst.

Durch die starre Verbindung zwischen den vorderen Endteilen des verschiebbaren Maschinenteils und des Trägerstabs wird der Trägerstab von dem sich bei Erwärmung nach vorn ausdehnenden Maschinenteil mitgenommen. Da der Trägerstab selbst gegen Temperaturänderungen in den auftretenden Bereichen unempfindlich ist und somit praktisch eine konstante Länge hat, wird der an seinem hinteren Ende befestigte Maßstab um genau den Betrag der thermischen Längung des Maschinenteils verschoben, was zu einer exakten Kompensation der Wärmedehnung des Maschinenteils führt. Um auch die direkt nicht erfaßbare Wärmedehnung eines an diesen verschiebbaren Maschinenteil angebauten weiteren Maschinenkörpers, z.B. eines an einen Spindelstock angebauten Vertikal-Fräskopfes, zu berücksichtigen, wird erfindungsgemäß die relativ geringe Längung des an seinem hinteren Ende mit dem hinteren Ende des Trägerstabs fest verbundenen Maßstabs herangezogen. Ein wesentlicher Vorteil dieses Kompensationssystems liegt darin, daß der Wärmeübergang zwischen dem Maschinenteil und dem Trägerstab keinen nennenswerten Einfluß auf die Kompensationsgenauigkeit hat, da sich die Länge des Trägerstabs aufgrund des gewählten Werkstoffes in dem infrage kommenden Temperaturbereich praktisch nicht ändert und der gesamte Trägerstab von dem sich ausdehnenden Endabschnitt des Maschinenteils mitgezogen wird. Ausgestaltungen der Erfindung ergeben sich aus den Unteransprüchen.

Eine gegenüber dem Stand der Technik erhebliche Verbesserung der Kompensationsgenauigkeit wird noch dadurch erreicht, daß der Lesekopf am freien Ende eines weiteren Trägerstabes befestigt ist, welcher in dem fraglichen Temperaturbereich praktisch keiner Wärmedehnung unterliegt und somit eine konstante Länge hat; das andere Ende des Trägerstabes ist dabei am stationären Maschinenteil in dessen dehnungsneutraler Ebene befestigt - bei symmetrisch aufgebauten Maschinenteilen ist diese gleich der Mittelebene -, so daß sich Wärmedehnungen des stationären Maschinenteils nicht auf die Lage des Lesekopfs auswirken.

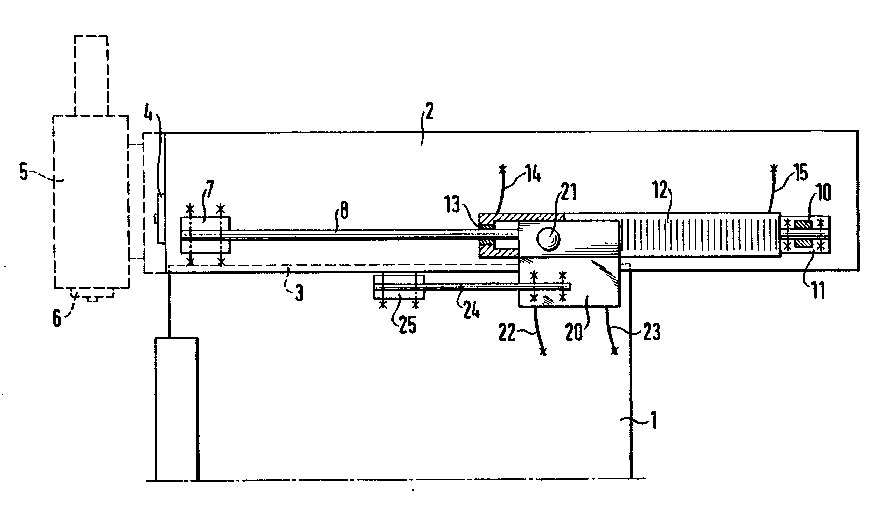

Im folgenden wird ein Ausführungsbeispiel der Erfindung anhand der Zeichnung im einzelnen beschrieben, in welcher der obere Teil einer Universal-Fräsmaschine mit der Kompensationsvorrichtung in schematischer Seitenansicht dargestellt ist.

Auf dem Maschinenständer 1 ist ein Spindelstock 2 in Horizontalführungen 3 motorisch verschiebbar geführt. Im Spindelstock 2 ist eine drehangetriebene Horizontalspindel 4 gelagert. Zur Durchführung von Bearbeitungsvorgängen in der Vertikalen kann an die vordere Stirnseite des Spindelstocks 2 ein - gestrichelt dargestellter - Vertikal-Fräskopf 5 mit einer antreibbaren Vertikalspindel 6 auf bekannte Weise angebaut werden.

Am vorderen Endteil des Spindelstocks 2 ist mittels einer Halterung 7 ein Trägerstab 8 fest angeschraubt, der in den auftretenden Temperaturbereichen von Normaltemperatur bis ca. 80 °C sich praktisch nicht ausdehnt oder verformt. Als Werkstoff für diesen Trägerstab 8 haben sich gebündelte Kohlenstoff-Fasern in einer geeigneten Matrix als besonders geeignet erwiesen. Das hintere Ende des Trägerstabes 8 ist in einer Gleitführung 10 am Spindelstock 2 längsverschiebbar gehalten und über eine Halterung 11 mit dem hinteren Ende eines Maßstabs 12 verschraubt. Bei dem dargestellten Ausführungsbeispiel durchragt der Trägerstab 8 den als Hohlkörper ausgeführten Maßstab 12 in seiner gesamten Länge, wobei zwischen beiden Bauteilen eine Gleitführung 13 am vorderen Ende des Maßstabs 12 vorgesehen ist. Der Maßstab 12 ist an Blattfedern 14, 15 an einer Seitenwand des Spindelstocks 2 angehängt, die während des Normalbetriebes eine gewisse nach rückwärts gerichtete Federkraft auf den Maßstab 12 ausüben und im Betrieb auftretende Schwingungen dämpfen.

Zum Ablesen der Meßpunkte auf dem Maßstab 12 dient ein Lesekopf 20 mit einer Optik 21, der mit der -nicht dargestellten - Programm-Steuereinheit elektrisch verbunden ist. Das Gehäuse des Lesekopfes 20 ist über zwei Blattfedern 22, 23 an einer Seitenwand des Ständers 1 befestigt. Daneben ist der Lesekopf 20 mit dem einen Ende eines weiteren Trägerstabes 24 starr befestigt, der aus einem gleichen Material wie der Trägerstab 8 besteht und in dem fraglichen Temperaturbereich sich praktisch nicht ausdehnt. Das andere Ende dieses Trägerstabes 24 ist bei dem gezeigten Ausführungsbeispiel in der dehnungsneutralen Ebene des Ständers 1 mittels einer Halterung 25 starr befestigt.

Das vorstehend beschriebene Wärmedehnungs-Kompensations-System arbeitet wie folgt:

Wenn sich der Spindelstock 2 während der Anfahrphase von Normaltemperatur auf seine Betriebstemperatur (etwa 50 °C) insbesondere in seiner vorderen Hälfte erwärmt, verschiebt sich beim Arbeiten mit der Horizontalspindel 4 der Angriffspunkt des eingesetzten Werkzeugs und beim Arbeiten mit der Vertikalspindel 6 die Spindelachse aufgrund der Wärmedehnung in der Zeichnung nach links um einen Betrag von einigen Zehntel Millimetern. Da der Trägerstab 8 mit seinem vorderen Ende in der Nähe der Arbeitsspindel über die Halterung 7 am Spindelstock befestigt ist, wird er bei einer Längung des Spindelstocks von diesem mitgenommen. Durch die Unempfindlichkeit des Trägerstabes 8 gegenüber Temperaturänderungen verschiebt sich sein hinteres Ende zusammen mit dem daran befestigten Maßstab 12 in der Gleitführung 10 um den gleichen Betrag, so daß auch die Meßpunkte auf dem Maßstab 12 sich in Richtung der Spindelstock-Längung bewegen. Die Kompensation der - äußerst geringen - Längung eines in die Horizontalspindel eingesetzten Werkzeugs inkl. seines Werkzeugkegels bzw. des Vertikalkopfes 5 mit seinen Anbaustücken am Spindelkopf wird durch das vorstehend beschriebene System nicht ausreichend berücksichtigt. Eine Kompensation dieser Längung erfolgt jedoch durch die relativ geringe Wärmedehnung des mit seinem in der Zeichnung rechten Ende am Trägerstab 8 befestigten Maßstabs 12, was sich in einer geringfügigen Weiterverschiebung der Meßpunkte in Richtung der Spindelstocklängung äußert.

Die Erwärmung auf Betriebstemperatur und auch Temperaturänderungen während des Betriebes sind nicht auf den Spindelstock 2 beschränkt, sondern treten auch im Ständer 1 auf. Die in Längsrichtung des Spindelstocks 2 wirksamen Wärmedehnungen des Ständers 1 sind bei den hohen Genauigkeitsanforderungen moderner Werkzeugmaschinen nicht zu vernachlässigen und werden gemäß dem Ausführungsbeispiel durch die Halterung des Lesekopfes 20 an dem in der Mittelebene des Ständers 1 fixierten weiteren Trägerstab 24 kompensiert.

Die Erfindung ist nicht auf das dargestellte Ausführungsbeispiel beschränkt. So kann beispielsweise der Maßstab 12 entweder direkt und großflächig an einer Seitenwand des Spindelstocks 2 anliegen, oder es können Zwischenlagen zwischen dem Maßstab 12 und der Seitenwand des Spindestocks 2 vorgesehen werden, um eine gezielte Wärmeübertragung vom Spindelstock 2 auf den Maßstab 12 herbeizuführen. Letzteres ermöglicht die Verwendung von Maßstäben gleicher Länge bei unterschiedlich langen Spindelstöcken bzw. anderen Maschinenteilen sowie auch ihre Anordnung in einem beliebigen Abschnitt des Spindelstocks. Daneben kann auch der Trägerstab 24 mit seinem vorderen Ende unmittelbar an der Stirnkante des Ständers 1 befestigt sein, wobei durch eine geeignete Länge des Trägerstabs 24 der Lesekopf 20 entsprechend der gewählten Lage des Maßstabs 12 beliebig positioniert werden kann.

## Patentansprüche

1. Werkzeugmaschine

   mit einem Spindelstock (2), der in Längsführungen (3) eines Maschinenständers (1) geführt ist, und

   mit einer Vorrichtung zum Erfassen der Wärmedehnung des Spindelstocks, die einen am Spindelstock parallel zu dessen Längsachse angeordneten Trägerstab (8) zur Halterung eines Meßpunkte tragenden Maßstabes (12) und einen am Maschinenständer befestigten elektrooptischen Lesekopf (20,21) enthält,

   **dadurch gekennzeichnet,**

daß der Trägerstab (8) aus einem Werkstoff mit im fraglichen Temperaturbereich h vernachlässigbarer Wärmedehnung besteht,

daß das vordere Ende des Trägerstabs (8) am vorderen Ende des Spindelstocks (2) starr befestigt ist, und

daß das hintere Ende des Trägerstabs (8) in einer am Spindelstock (2) fest montierten Gleitführung (10) angeordnet und mit dem hinteren Ende des Maßstab es (12) fest verbunden ist.

2. Werkzeugmaschine nach Anspruch 1,
   dadurch gekennzeichnet,
   daß der Werkstoff des Trägerstabs (8) im wesentlichen aus gebündelten Kohlenstoff-Fasern in einer geeigneten Matrize besteht.

3. Werkzeugmaschine nach Anspruch 1 oder 2,
   dadurch gekennzeichnet,
   daß der Maßstab (12) über Blattfedern (14, 15) an einer Seitenwand des Spindelstocks (2) befestigt und mit seinem vorderen Ende in einer Gleitführung (13) am Trägerstab (8) geführt ist.

4. Werkzeugmaschine nach einem der Ansprüche 1 bis 3,
   dadurch gekennzeichnet,
   daß der Lesekopf (20) am freien Ende eines weiteren Trägerstabs (24) mit im fraglichen Temperaturbereich vernachlässigbarer Wärmedehnung montiert ist, dessen anderes Ende in einer am Maschinenständer (1) in dessen dehnungsneutraler Ebene befestigten Halterung (25) starr befestigt ist.

5. Werkzeugmaschine nach Anspruch 4,
   dadurch gekennzeichnet,
   daß der Lesekopf (20) über Blattfedern (22, 23) am Maschinenständer (1) befestigt ist.

## Claims

1. A machine tool comprising a headstock (2) guided in longitudinal guides (3) of a machine column (1) and

   comprising means For detecting the thermal expansion of the headstock, such means comprising a carrier rod (8) disposed on the headstock parallel to the longitudinal axis thereof to support a scale (12) bearing graduations, and an electro-optical read head (20, 21) fixed on the machine column,

   characterised in that

the carrier rod (8) consists of a material having negligible thermal expansion in the temperature range in question,

in that the front end of the carrier rod (8) is rigidly fixed at the front end of the headstock (2), and

in that the rear end of the carrier rod (8) is disposed in a slideway (10) rigidly mounted on the headstock (2) and is rigidly connected to the rear end of the scale (12).

2. A machine tool according to claim 1, characterised in that the material of the carrier rod (8) consists essentially of bunched carbon Fibres in a suitable matrix.

3. A machine tool according to claim 1 or 2, characterised in that the scale (12) is fixed on a side wall of the headstock (2) via leaf springs (14, 13) and its front end is guided in a slideway (13) on the carrier rod (8).

4. A machine tool according to any one of claims 1 to 3, characterised in that the read head (20) is mounted at the free end of another carrier rod (24) having negligible thermal expansion in the temperature range in question, the other end of said carrier rod being rigidly fixed in a holder (25) fixed on the machine column (1) in its expansion-neutral plane.

5. A machine tool according to claim 4, characterised in that the read head (20) is fixed on the machine column (1) via leaf springs (22, 23).

**Revendications**

1. Machine-outil comportant une poupée porte-broche (2) qui est guidée dans des glissières longitudinales (3) d'un montant de machine (1), et un dispositif de détection de la dilatation thermique de la poupée porte-broche qui comprend un barreau support (8) disposé sur la poupée porte-broche, parallèlement à son axe longitudinal et destiné au maintien d'une règle (12) portant des points de repère, ainsi qu'un capteur de lecture électro-optique (20, 21), caractérisée en ce que le barreau support (8) est réalisé en un matériau présentant une dilatation thermique négligeable dans la plage de température en question, en ce que l'extrémité avant du barreau support (8) est fixée de manière rigide sur l'extrémité avant de la poupée porte-broche (2), et en ce que l'extrémité arrière du barreau support (8) est disposée dans un guidage lisse (10) monté de manière fixe sur la poupée porte-broche (2), et est reliée de manière fixe à l'extrémité arrière de la règle (12).

2. Machine-outil selon la revendication 1, caractérisée en ce que le matériau du barreau support (8) est constitué de fibres de carbone en faisceau dans une matrice appropriée.

3. Machine-outil selon la revendication 1 ou 2, caractérisée en ce que la règle (12) est fixée sur une paroi latérale de la poupée porte-broche (2) par l'intermédiaire de lames de ressort (14, 15), et est guidée par son extrémité avant, dans un guidage lisse (13) sur le barreau support (8).

4. Machine-outil selon l'une des revendications 1 à 3, caractérisée en ce que le capteur de lecture (20) est monté sur l'extrémité libre d'un autre barreau support (24) présentant une dilatation thermique négligeable dans la plage de température en question, et dont l'autre extrémité est fixée de manière rigide sur un élément de fixation (25) lui-même fixé sur le montant (1) de la machine, dans le plan neutre de dilatation de celui-ci.

5. Machine-outil selon la revendication 4, caractérisée en ce que le capteur de lecture (20) est fixé sur le montant (1) de la machine, par l'intermédiaire de lames de ressort (22, 23).